# EUROPEAN PATENT SPECIFICATION

(11) **EP 3 781 437 B1**
(45) Date of publication and mention of the grant of the patent: **16.02.2022**
(21) Application number: 19733732.2
(22) Date of filing: 24.06.2019
(51) Int. Cl.: B60P 3/34, B62D 21/02

(54) **MOTORHOME WITH A LADDER-LIKE VEHICLE FRAME**
WOHNMOBIL MIT EINEM LEITERARTIGEN FAHRZEUGRAHMEN
CAMPING-CAR AVEC CHÂSSIS DE VÉHICULE EN FORME D'ÉCHELLE

(30) Priority: 25.06.2018 DE 102018210327
(43) Date of publication of application: 24.02.2021
(73) Proprietor: Protec GmbH & Co. KG, 82234 Wessling (DE)
(72) Inventor: WIETH, Franz, 82340 Feldafing (DE)
(74) Representative: von Hirschhausen, Helge
(86) International application number: PCT/EP2019/066665
(87) International publication number: WO 2020/002232

(56) References cited:
- WO-A2-2017/103030
- DE-U1-202005 007 060
- US-A- 5 501 504

## Description

The present invention concerns a motorhome with a chassis which has at least one axle and which has, at least in some areas, a ladder-like vehicle frame extending along the vehicle longitudinal axis and on which a superstructure is arranged.

Such motorhomes are generally known, see for example DE 20 2005 007060 U1. In the sense of this invention, a motorhome is to be understood primarily as a motorized vehicle such as a recreational vehicle. But the invention can also be implemented in non-motorized vehicles such as caravans. It also does not matter for which purposes the motorhome is used. It is only important that it has a superstructure which has an interior suitable for the permanent stay of people. It also makes no difference whether the motorhome is used for long journeys or very short journeys - for example within a city.

Usually motorized motorhomes are mounted on chassis ranging from conventional vans to those of trucks. These usually have, at least in some areas, a ladder-like vehicle frame. Such a vehicle frame usually has two long beams extending along the vehicle longitudinal axis, which are connected to each other by several short cross beams.

In the construction of such motorhomes, a subframe, which is arranged on the actual chassis frame, is normally required nowadays to distribute the load of the superstructure and to achieve a level superstructure floor. This is practically a doubling of the ladder-like vehicle frame with the aim of creating a support possibility for the floor of the superstructure so that it also runs smoothly in the area of the rear axle if possible. Not only the wheel arches but also cross beams are mounted under the superstructure floor in the installation space of these common subframes. The longitudinal beams of such a subframe, like the vehicle frame, usually consist of U-profiles or rectangular tubes, which are mounted directly on and parallel to the profiles of the vehicle frame.

The disadvantage of this conventional construction method is that the installation space in the area of the subframe is essentially lost for the use of technical installations. This is particularly disadvantageous for motorhomes, as they require a lot of installation space for tanks and other technical equipment in addition to the living space. So with limited exterior dimensions, at the end of the day installation space is used for the technical equipment, which one would prefer to use instead for the living space inside the superstructure, or the vehicle becomes larger and higher.

The task of the invention is therefore to show a motorhome in which the installation space available in the vehicle is used more economically than in conventional construction methods to create a better usable interior in the superstructure.

The solution to this problem is achieved with the motorhome according to claim 1, that means a motorhome which is designed in the manner described above, in which additionally an intermediate support structure is arranged between the vehicle frame and the superstructure, the intermediate support structure comprising a central beam extending along the vehicle longitudinal axis and several cantilevers attached thereto and extending transversely thereto. This construction makes it possible to compensate for and significantly reduce the volume loss caused by the conventional, relatively wide subframe construction. The free space gained in this way allows for tanks and/or technical installations to be placed between the cantilevers in this area without the vehicle floor or superstructure having to be raised additionally. This also means that the centre of gravity of the vehicle lies lower compared to a solution with a doubled vehicle frame. Thus the motorhome according to invention has a better road holding.

Preferably, the superstructure has at least one room extension module displaceably attached to it. This room extension module, also referred to here as a slideout, functions according to a drawer-like functional principle and offers the possibility of extending the room of the motorhome by sliding out a room that is usually open towards the inside of the vehicle. Therefore, most such slideouts have three walls, a floor and a roof.

Preferably, the central beam has a tubular cross-section at least in some areas. This design has the advantage that the central beam reaches approximately the same torsional stiffness as the ladder-like frame common so far. However, it is considerably lighter and less volume is used in areas where tanks and/or technical installations can be installed. For a standard, approximately 5-metre-long superstructure, the subframe has a base area of approximately 4 m². For technical reasons, this leads to a subframe approximately 20 cm high according to the usual construction method. This means that approximately 0.8 m³ of volume are lost for possible technical equipment such as liquid tanks, technical installations and storage space. With the central tube proposed here, with a diameter of approximately 20 cm a volume of only about 0.1 m³ would be achieved in comparison, but with the same torsional stiffness as with the conventional subframe, as already mentioned, using a corresponding wall thickness. This makes it possible, for example, to arrange tanks with a total capacity of more than 500 litres in the space thus gained without having to raise the vehicle floor.

Preferably, the central beam is arranged centrally on the vehicle frame. This leads to a symmetrical and central load distribution.

It makes sense for the central beam to be at least as long as the area between a driver's cab and a rear end of the vehicle. This means that only the area of the motorhome chassis is provided with the intermediate support structure, in which the part of the superstructure is located that is primarily intended for living purposes or which is not intended for driving the vehicle.

It is particularly useful if at least one cantilever, preferably all cantilevers, of the intermediate support structure is arranged above and aligned with an underlying beam of the vehicle frame. This allows an even greater overall height to be achieved between the cantilevers for the technical installations, tanks or storage spaces, etc. to be provided in this area.

It is particularly advantageous if an upper, preferably smooth continuous, floor is arranged on the intermediate support structure. This results in a particularly usable floor surface in the area of the superstructure, because it is smooth. In addition, it is particularly desirable if a lower floor is arranged below the intermediate support structure. This protects the overlying components, technical installations, tanks or storage spaces, etc. from soiling from below.

A double floor can be achieved by combining upper and lower floors. Herein, it is particularly advantageous if at least one tank is arranged between the lower floor and the upper floor. This way, the space required for load transfer is used to accommodate the tanks that are absolutely necessary in a motorhome and a high efficiency is achieved.

The space between the lower floor and the upper floor is preferably laterally closed and thermally insulated. This way, the motorhome can also be used in winter, for example, without freezing any tanks, technical equipment or other installations located in the interspace between the lower and upper floor. This closed room also provides good overall shielding against the weather and other external influences. It makes sense to shift the interspace laterally in such a way, that also in the area between the wheel arches a lateral closing and insulation are present.

Preferably, the intermediate support structure has a height which is at least so great that the intermediate support structure is flush with a wheel arch provided in the area of a rear axle. This makes it easier to arrange a smooth upper floor on the intermediate support structure. This has great advantages, especially when room extension modules are provided in the superstructure. In the best case scenario, these - especially if they are of a particularly large design - can even cover almost the entire length of the superstructure.

Preferably, at least one drive and/or a guide for a room extension module mounted on the superstructure so as to be displaceable above the upper floor is arranged between the lower floor and the upper floor. This way, the space between the floors is also used to accommodate the drive or the guide for the room extension module. Thus, these components are not disturbingly arranged in the living space or in the room of the superstructure respectively and are also well protected against weather influences and the like.

In a particularly preferred embodiment, at least one shower tray is recessed in the upper floor in such a way that a room extension module can be pushed over it. The upper side of the shower tray is therefore maximum flush with the upper side of the upper floor. This means that the interior of the motorhome can be reduced in a particularly efficient way by using large room extension modules. In addition, the reduction is mainly at the expense of the shower that means an equipment detail that is least urgently needed when driving.

Accordingly, it is furthermore particularly desirable if the upper side of the upper floor is so smooth that a room extension module can be displaced on it.

In the following, the invention will be explained in more detail using the examples shown in the drawings, wherein schematically show:
- Fig. 1: a perspective view of a first motorhome according to the invention in the driving state;
- Fig. 2: the motorhome shown in Fig. 1 in a state in which a lateral room extension module has been displaced out of the superstructure;
- Fig. 3: an enlarged sectional view through the rear area of a second embodiment of a motorhome according to the invention with a viewing direction to the rear from the driver's cab to the rear axle;
- Fig. 4: a plan view of a horizontal section transverse to the section shown in Fig. 3 through the second embodiment of a motorhome according to the invention;
- Fig. 5: a section through the rear area of a third embodiment of a motorhome according to invention with a viewing direction from the driver's cab to the rear and the rear axle in an extended state of the room extension modules;
- Fig. 6: the section shown in Fig. 5 in the state with the room extension modules retracted (travel state);
- Fig. 7: a plan view of the layout of the superstructure of the motorhome shown in Fig 5 when extended; and
- Fig. 8: the layout of the superstructure shown in Fig. 6 in the state with the room extension modules retracted (travel state).

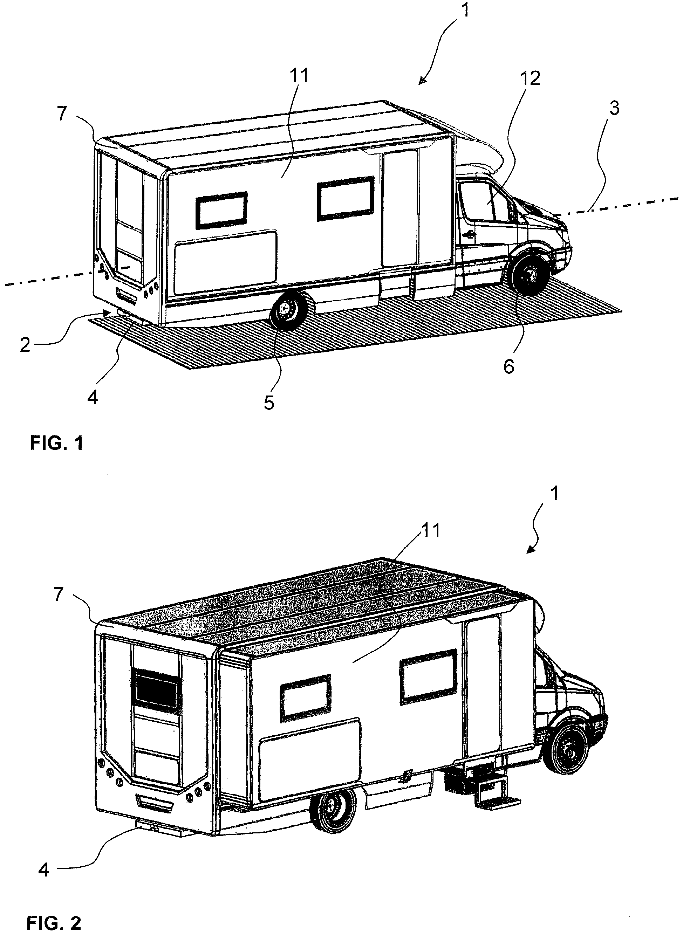

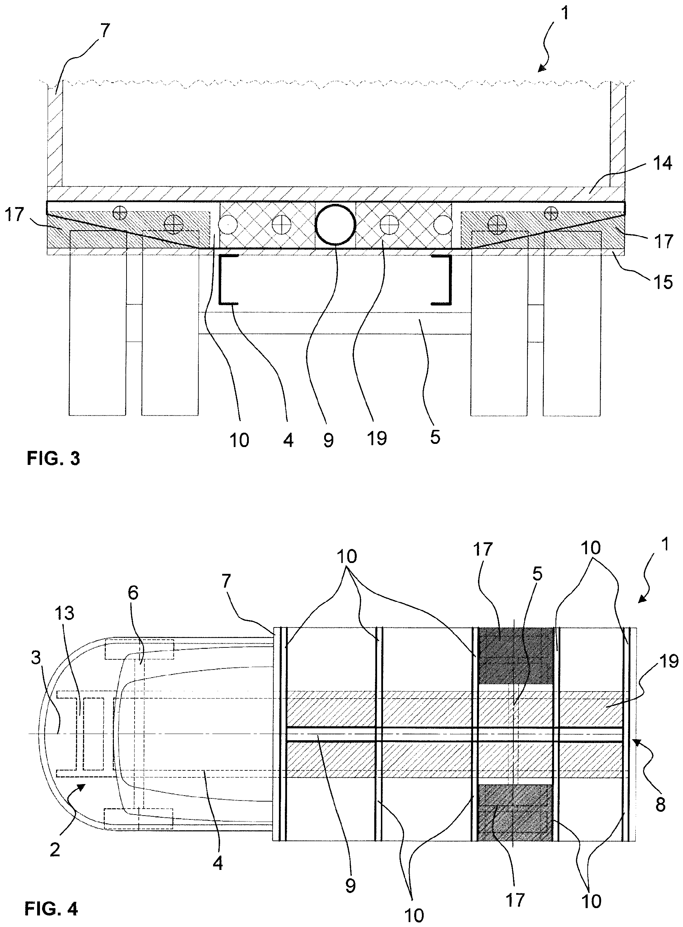

In the figures, identical reference numerals denote identical components in the three different embodiments partially differing from each other. However, all the embodiments of motorhomes 1 according to the invention shown here always have a chassis 2 which has, at least in some areas, a ladder-like vehicle frame 4 extending along the vehicle longitudinal axis 3. Such a vehicle frame 4 can be clearly seen in Fig. 4, while in Figs. 1 and 2 only the rearmost end of the vehicle frame 4 can be seen. In all examples shown here, the vehicle frame 4 connects the rear axle 5 with the front axle 6 and supports the superstructure 7 of the respective motorhome 1.

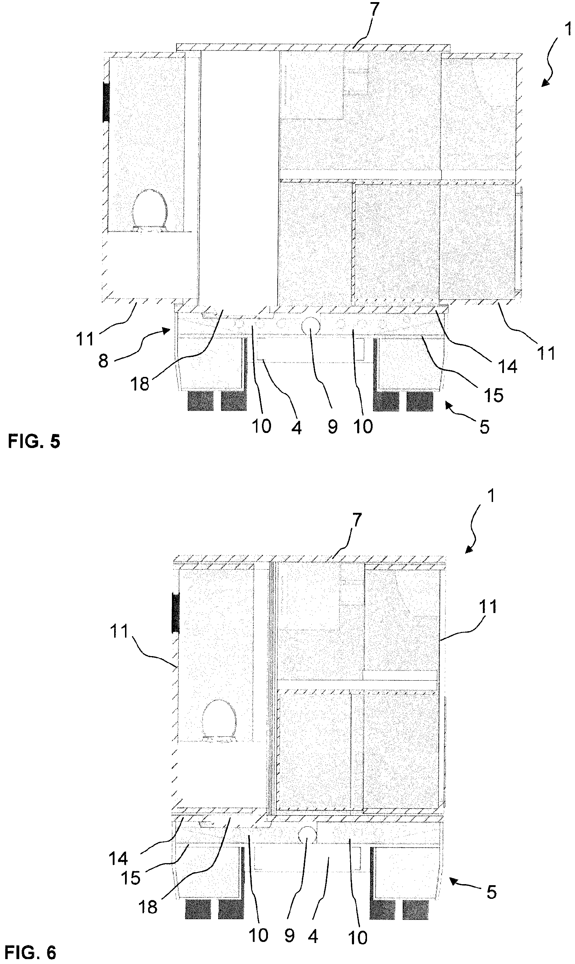

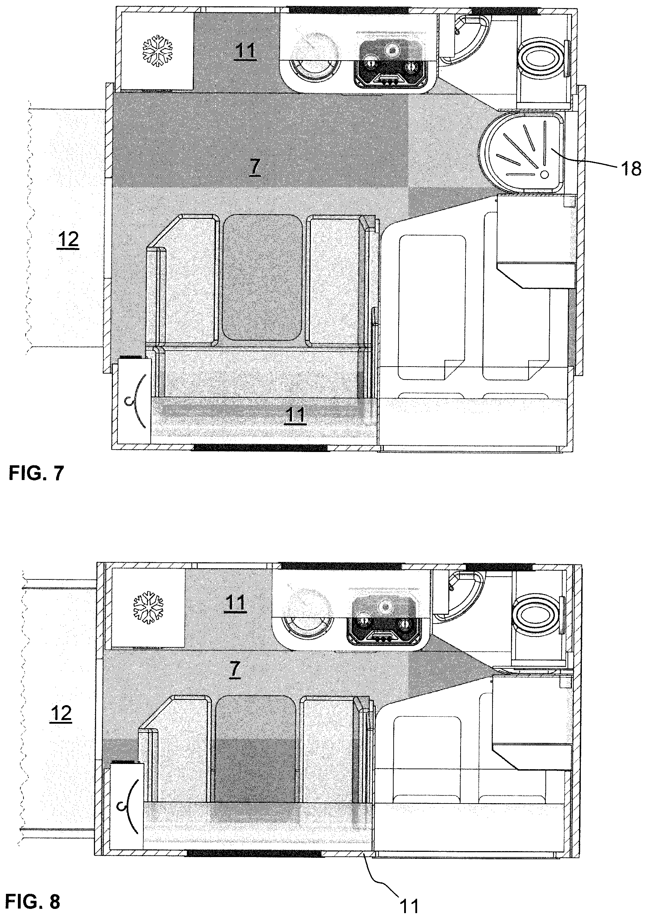

The first embodiment shown in Figs. 1 and 2 and also the third embodiment shown in Figs. 5 to 8 both have two lateral room extension modules 11 which each extend over the entire length and height of the superstructure 7 and which can be retracted or extended. Thus, the interior of the motorhome 1 can be enlarged considerably, as can be seen especially well in figures 5 and 7.

The second embodiment of a motorhome 1 according to the invention shown in Fig. 3 and Fig. 4 differs from the other two embodiments primarily in that there are no lateral room extension modules arranged in the superstructure 7.

As can be seen from the section views of figures 3, 5 and 6, a motorhome 1 according to the invention always has an intermediate support structure 8 arranged between the vehicle frame 4 and the superstructure 7. The intermediate support structure 8 has a central beam 9 extending along the vehicle longitudinal axis 3 and several cantilevers 10 attached to it and extending transversely thereto. In all the embodiments shown here, the central beam 9 is a tubular beam with high torsional stiffness. As can be seen in Fig. 4, the beam 9 essentially runs from the rear end of the driver's cab 12 to the rear end of the superstructure 7. In the embodiments shown here, the cantilevers 10 run orthogonally to the central beam 9 and are aligned with cross beams 13 of the chassis 2 or of the vehicle frame 4, respectively, arranged below. The upper floor 14 is located on the cantilevers 10 and a lower floor 15 extends under the cantilevers 10. It is therefore a double floor structure which encloses the intermediate support structure 8 and thus provides good thermal insulation for the installations arranged in this area.

The special feature of the intermediate support structure 8 according to the invention lies in a large gain in space, which is better usable and is located in the area of the intermediate support structure 8 and below. The crosswise hatching 19 in Fig. 3 shows this area, which is better usable compared to a conventional doubling of the vehicle frame 4. The same area 19 in Fig. 4 is not hatched crosswise but just lined, but the areas are identical. Only in the area of the wheel arches 17, as can be seen from the darker hatching used there, is this space broken through, as the rear wheels of chassis 2 project into it.

In comparison to the conventional doubling of the vehicle frame 4, this results in a considerably better usable space under the actual superstructure 7. Preferably tanks, storages, but also drives and guides for possible room extension modules 11, etc. can be arranged in the thus gained space 19 and the adjacent spaces. Also, this way a smooth floor 14 can be created for the superstructure 7 without having to displace the centre of gravity of the motorhome 1 upwards.

In addition, when using lateral slideouts 11 in superstructure 7, as can be clearly seen in Figs. 7 and 8, this makes much better usable layouts or furnishings than previously possible. Thus, as shown at the top of Fig. 7, the kitchen and toilet room can be arranged in a single lateral slideout 11 and moved outwards in a single step. Accordingly, on the side of superstructure 7 shown at the bottom of Fig. 7, an outward foldable bench, for example, and also a foldable bedhead of a double bed can be moved or folded outwards in a very simple and elegant way, thus considerably improving and enlarging the usability of the living space.

A special highlight of the invention is the fact that a shower tray 18 can be arranged in room 19, which is better usable and created through the intermediate support structure 8 according to the invention. For this purpose, the shower tray can simply be recessed into the upper floor 14 of the superstructure 7. Thus the room extension module 11 can be completely pushed over the shower tray 18 in the travel state as shown in Fig. 7. As can be seen in the comparison between Figs. 7 and 8, the shower tray 18 disappears practically completely under the floor of the slideout 11 without restricting the usability of the kitchen area or toilet that may still be required when travelling.

The shower tray 18 is well protected against the weather, dirt, frost and heat by the lower floor 15. Herein, the intermediate support structure 8 with the two floors 14 and 15 and the side walls not shown here but existing ensure that not only the shower tray 18 but also its drains and the tanks for fresh and waste water can be accommodated in this area and are also safely protected from the weather etc..

### List of Reference Numerals

- 1.: motorhome
- 2.: chassis
- 3.: vehicle longitudinal axis
- 4.: vehicle frame
- 5.: rear axle
- 6.: front axle
- 7.: superstructure
- 8.: intermediate support structure
- 9.: central beam
- 10.: cantilever
- 11.: room extension module / slideout
- 12.: driver's cab
- 13.: cross beam of the vehicle frame
- 14.: upper floor
- 15.: lower floor
- 16.: tank
- 17.: wheel arch of the rear axle
- 18.: shower tray
- 19.: area of better usable space

## Claims

1. Motorhome (1) with a chassis (2) which has at least one rear axle (5) and which has, at least in some areas, a ladder-like vehicle frame (4) extending along the vehicle longitudinal axis (3) and on which a superstructure (7) is arranged,
**characterized in that**
an intermediate support structure (8) is arranged between the vehicle frame (4) and the superstructure (7), the intermediate support structure (8) comprising a central beam (9) extending along the vehicle longitudinal axis (3) and several cantilevers (10) attached thereto and extending transversely thereto.

2. Motorhome according to claim 1,
wherein
the superstructure (7) has at least one room extension module (11) displaceably attached to it.

3. Motorhome according to any one of the preceding claims,
wherein
the central beam (9) is arranged centrally on the vehicle frame (4).

4. Motorhome according to any one of the preceding claims,
wherein
the central beam (9) has a tubular cross-section at least in some areas.

5. Motorhome according to any one of the preceding claims,
wherein
the central beam (9) is at least as long as an area between a driver's cab (12) and a rear end of the superstructure (7).

6. Motorhome according to any one of the preceding claims,
wherein
at least one cantilever (10), preferably all cantilevers (10), is arranged above and aligned with an underlying cross beam (13) of the vehicle frame (4).

7. Motorhome according to any one of the preceding claims,
wherein
at least one cantilever (10), preferably all cantilevers (10), have a crosssectional height which increases towards the central beam (9).

8. Motorhome according to any one of the preceding claims,
wherein
an upper, preferably smooth continuous, floor (14) is arranged on the intermediate support structure (8).

9. Motorhome according to any one of the preceding claims,
wherein
a lower floor (15) is arranged below the intermediate support structure (8).

10. Motorhome according to claims 8 and 9,
wherein
at least one tank is arranged between the lower floor (15) and the upper floor (14).

11. Motorhome according to claims 8 and 9, or according to claim 10
wherein
the space between the upper floor (14) and the lower floor (15) is laterally closed and thermally insulated.

12. Motorhome according to any one of the preceding claims,
wherein
the intermediate support structure (8) has a height which is at least so great that the intermediate support structure (8) is flush with a wheel arch (17) provided in the area of a rear axle (5).

13. Motorhome according to claims 8 and 9, or according to any one of claims 10 and 11,
wherein
at least one drive and/or a guide for a room extension module (11) mounted on the superstructure (7) so as to be displaceable above the upper floor (14) is arranged between the upper floor (14) and the lower floor (15).

14. Motorhome according to claim 8 or according to any one of claims 10 , 11, and 13,
wherein in the upper floor (14) at least one shower tray (18) is recessed so deeply that a room extension module (11) can be pushed over it.

15. Motorhome according to claim 8 or according to any one of claims 10 , 11, 13 and 14,
wherein
the upper side of the upper floor (14) is so smooth that a room extension module (11) can be displaced on it.

## Patentansprüche

1. Reisemobil (1) mit einem Fahrgestell (2), das mindestens eine Hinterachse (5) aufweist und das zumindest bereichsweise einen leiterartigen Fahrzeugrahmen (4) aufweist, der sich entlang der Fahrzeuglängsachse (3) erstreckt, auf dem ein Aufbau (7) angeordnet ist, **dadurch gekennzeichnet, dass**
eine Zwischenträgerstruktur (8) zwischen dem Fahrzeugrahmen (4) und dem Aufbau (7) angeordnet ist, wobei die Zwischenträgerstruktur (8) einen Mittelträger (9), der sich entlang der Fahrzeuglängsachse (3) erstreckt umfasst und mehrere daran befestigte Ausleger (10), die sich quer dazu erstrecken.

2. Reisemobil nach Anspruch 1, wobei
an dem Aufbau (7) mindestens ein Raumerweiterungsmodul (11) verschiebbar angebracht ist.

3. Reisemobil nach einem der vorhergehenden Ansprüche, wobei
der Mittelträger (9) mittig am Fahrzeugrahmen (4) angeordnet ist.

4. Reisemobil nach einem der vorhergehenden Ansprüche, wobei
der Mittelträger (9) zumindest teilweise einen rohrförmigen Querschnitt aufweist.

5. Reisemobil nach einem der vorhergehenden Ansprüche, wobei
der Mittelträger (9) mindestens so lang ist wie ein Bereich zwischen einer Fahrerkabine (12) und einem hinteren Ende des Aufbaus (7).

6. Reisemobil nach einem der vorhergehenden Ansprüche, wobei
mindestens ein Ausleger (10), vorzugsweise alle Ausleger (10), oberhalb eines darunter liegenden Querträgers (13) des Fahrzeugrahmens (4) angeordnet und auf diesen ausgerichtet ist.

7. Reisemobil nach einem der vorhergehenden Ansprüche, wobei
mindestens ein Ausleger (10), vorzugsweise alle Ausleger (10), eine zum Mittelträger (9) hin zunehmende Querschnittshöhe aufweisen.

8. Reisemobil nach einem der vorhergehenden Ansprüche, wobei ein oberer, vorzugsweise glatter, durchgehender, Boden (14) auf der Zwischenträgerstruktur (8) angeordnet ist.

9. Reisemobil nach einem der vorhergehenden Ansprüche, wobei ein Unterboden (15) unterhalb der Zwischenträgerstruktur (8) angeordnet ist.

10. Reisemobil nach Anspruch 8 und 9, wobei
mindestens ein Tank zwischen dem Unterboden (15) und dem oberen Boden (14) angeordnet ist.

11. Reisemobil nach Anspruch 8 und 9 oder nach Anspruch 10, wobei der Raum zwischen dem oberen Boden (14) und dem Unterboden (15) seitlich geschlossen und thermisch isoliert ist.

12. Reisemobil nach einem der vorhergehenden Ansprüche, wobei die Zwischenträgerstruktur (8) eine Höhe aufweist, die zumindest so groß ist, dass die Zwischenträgerstruktur (8) mit einem Radkasten (17) bündig ist, der im Bereich einer Hinterachse (5) vorgesehen ist.

13. Reisemobil nach Anspruch 8 und 9 oder nach einem der Ansprüche 10 und 11, wobei mindestens ein Antrieb und/oder eine Führung für ein Raumerweiterungsmodul (11) am Aufbau (7), so dass es oberhalb des oberen Bodens (14) verschiebbar ist, zwischen dem oberen Boden (14) und dem Unterboden (15) angeordnet ist.

14. Reisemobil nach Anspruch 8 oder nach einem der Ansprüche 10, 11 und 13, wobei im oberen Boden (14) mindestens eine Duschwanne (18) so tief eingelassen ist, dass ein Raumerweiterungsmodul (11) darüber geschoben werden kann.

15. Reisemobil nach Anspruch 8 oder nach einem der Ansprüche 10, 11, 13 und 14, wobei die Oberseite des oberen Bodens (14) so glatt ist, dass ein Raumerweiterungsmodul (11) darauf verschoben werden kann.

## Revendications

1. Camping-car avec un châssis (2) qui comprend au moins un essieu arrière (5) et qui comprend, au moins dans quelques zones, un châssis de véhicule (4) de type en échelle qui s'étend le long de l'axe longitudinal (3) du véhicule et sur lequel une superstructure (7) est disposée,
**caractérisé en ce que**
une structure intermédiaire de support (8) est disposée entre le châssis de véhicule (4) et la superstructure (7), ladite structure intermédiaire de support (8) comprenant une poutre centrale (9) s'étendant le long de l'axe longitudinal (3) du véhicule et plusieurs poutres cantilever (10) attachées à celle-ci et s'étendant dans une direction transversale à celle-ci.

2. Camping-car selon la revendication 1, dans lequel
ladite superstructure (7) comprend au moins un module (11) d'extension d'espace qui est attaché de façon déplaçable à celle-ci.

3. Camping-car selon l'une quelconque des revendications précédentes, dans lequel ladite poutre centrale (9) est disposée de façon centrale sur ledit châssis de véhicule (4).

4. Camping-car selon l'une quelconque des revendications précédentes, dans lequel
ladite poutre centrale (9) présente une section transversale en forme de tube au moins dans quelques zones.

5. Camping-car selon l'une quelconque des revendications précédentes, dans lequel
la longueur de ladite poutre centrale (9) est au moins égale à une zone entre la cabine du conducteur (12) et une extrémité arrière de la superstructure (7).

6. Camping-car selon l'une quelconque des revendications précédentes, dans lequel
au moins une poutre cantilever (10), de préférence toutes les poutres cantilever (10), est disposée au-dessus d'une traverse sous-jacente (13) dudit châssis de véhicule (4) et de façon alignée avec celle-ci.

7. Camping-car selon l'une quelconque des revendications précédentes, dans lequel
la hauteur en section transversale d'au moins une poutre cantilever (10), de préférence de toutes les poutres cantilever (10), augmente vers ladite poutre centrale (9).

8. Camping-car selon l'une quelconque des revendications précédentes, dans lequel
un plancher supérieur (14), de préférence lisse et continu, est disposé sur ladite structure intermédiaire de support (8).

9. Camping-car selon l'une quelconque des revendications précédentes, dans lequel un plancher inférieur (15) est disposé au-dessous de ladite structure intermédiaire de support (8).

10. Camping-car selon les revendications 8 et 9, dans lequel
au moins un réservoir est disposé entre le plancher inférieur (15) et le plancher supérieur (14).

11. Camping-car selon les revendications 8 et 9, ou selon la revendication 10, dans lequel
l'espace entre le plancher supérieur (14) et le plancher inférieur (15) est fermé sur les côtés est isolé thermiquement.

12. Camping-car selon l'une quelconque des revendications précédentes, dans lequel
la hauteur de ladite structure intermédiaire de support (8) est au moins telle que ladite structure intermédiaire de support (8) est à fleur avec une passage de roue (17) prévue dans la région d'un essieu arrière (5).

13. Camping-car selon les revendications 8 et 9, ou selon l'une quelconque des revendications 10 et 11, dans lequel
au moins un entraînement et/ou au moins un guidage pour un module (11) d'extension d'espace monté sur la superstructure (7) de façon à être déplaçable au-dessus du plancher supérieur (14) est disposé entre le plancher supérieur (14) et le plancher inférieur (15).

14. Camping-car selon la revendication 8 ou selon l'une quelconque des revendications 10, 11 et 13, dans lequel
dans le plancher supérieur (14) au moins un receveur de douche (18) est encastré profondément de façon qu'on peut, en poussant, déplacer le module (11) d'extension d'espace pardessus de celui-ci.

15. Camping-car selon la revendication 8 ou selon l'une quelconque des revendications 10, 11, 13 et 14, dans lequel
le côté supérieur du plancher supérieur (14) est tellement lisse qu'on peut déplacer un module (11) d'extension d'espace sur celle-ci.
